# EUROPEAN PATENT APPLICATION

(11) **EP 3 156 869 A1**
(43) Date of publication of application: **19.04.2017**
(21) Application number: 15806321.4
(22) Date of filing: 15.01.2015
(51) Int. Cl.: G05B 23/02

(54) **MOBILE PHONE VOICE-BASED AUTOMOBILE DIAGNOSTICS METHOD**

(30) Priority: 11.06.2014 CN 201410256757
(71) Applicant: Launch Software Development Co., Ltd., Shenzhen, Guangdong 518000 (CN)
(72) Inventor: LIU, Jun, Shenzhen Guangdong 518000 (CN); LI, Jianfeng, Shenzhen Guangdong 518000 (CN); WEI, Zewei, Shenzhen Guangdong 518000 (CN)
(74) Representative: Krauns, Christian
(86) International application number: PCT/CN2015/070780
(87) International publication number: WO 2015/188624

(57) **Abstract**

The method includes a car diagnostic method based on mobile phone voice mode which includes the following steps: step 1, providing a connector which will be mounted to a car, downloading a client to a mobile phone, opening a microphone of the mobile phone or opening the client by a user to input voice; step 2, interpreting voice content and executing commands by the client after the client had received the input voice; step 3, communicating the client software with the connector mounted on the car automatically; step 4, starting a diagnostic software, collecting data from the car, and analyzing the data from the car professionally to form a diagnostic result, by the client; step 5, transmitting the diagnostic result to the client, outputting the diagnostic result to the user via voice mode, and storing the diagnostic result. For the car diagnostic method based on mobile phone voice mode provided by the present invention, by doing full function diagnosis via voice input through the client of the mobile phone, diagnostic information of each car can be learned conveniently and quickly.

## Description

### CROSS REFERENCE TO RELATED APPLICATIONS

This application claims priority to Chinese Patent Application No. 201410256757.7, entitled "MOBILE PHONE VOICE-BASED AUTOMOBILE DIAGNOSTICS METHOD" and filed on June 11, 2014, which is hereby incorporated in its entireties by reference.

### FIELD OF THE TECHNICAL

The present disclosure relates to car technology field, and particularly to a car diagnostic method based on mobile phone voice mode.

### BACKGROUND

Cars are most familiar and common transportation for people, and they play a very important role in people's daily life. Although cars have different quality and different appearance, it is inevitable that a various of faults will occur in use, and it needs to clear or repair faults in time. With the development of society and technology, electronic technique, automatic technique, and electronic computer technique are used more and more in developing and producing cars. On one side, the degree of automatization of cars becomes higher and higher, performance becomes more excellent, and operation becomes more convenient and flexible, on another side, higher requirements for car's maintenance and detection are needed, and conventional manual monitoring and maintenance manners cannot satisfy maintenance requirements of new types of cars.

With the quick development of automatic control technique of cars, systems controlled by computers become more and more, car's structure becomes more and more complex, and car's fault diagnosis becomes more and more complex. At the same time, car status and safety of cars are the first things which are very cared by everyone. More and more car owners and car enthusiasts pay more attention to repair and daily maintenance of cars, and hope that they can use and repair cars more safely, more reliably, and more economically, by learning and knowing car default information in time. Particularly, when people go on a long journey in a car, car owners hope that their cars will receive an examination to determine whether or not there is any fault, to make sure that they can rest assured. As professional car default decoders are professional maintenance devices owned by car maintenance stations and 4S stores, cost is high, and device volume is great, and it is inconvenient for car owners and car enthusiasts to use and carry about. However, small read code cards used in car diagnosis cannot specifically display car diagnostic information due to their design and structure, thus cannot satisfy car owners' and car enthusiasts' requirements of learning car motion status in time.

Smart phones already become a necessity for consumers due to their convenient operation and powerful functions. A smart phone can display a normal webpage the same as that the webpage is displayed on a personal computer. It has an independent operating system and nice user interfaces. It has strong application scalability, and applications can be installed therein and deleted from it randomly.

With the progress and standardization of cars, for control systems of car detection and diagnosis, mobile phone diagnosis already becomes widespread. However, for conventional mobile phone diagnosis, it needs technicians with better professional skills to do diagnosis, and it is not good for car owners and car enthusiasts to learn car motion status conveniently and quickly.

### SUMMARY

The present invention aims to provide a car diagnostic method based on mobile phone voice mode. By doing full function diagnosis via voice input through the client of the mobile phone, diagnostic information of each car can be learned conveniently and quickly.

To realize the above-mentioned purpose, the present invention provides a car diagnostic method based on mobile phone voice mode which includes the following steps.

Step 1, providing a connector which will be mounted to a car, downloading a client to a mobile phone, opening a microphone of the mobile phone or opening the client by a user to input voice.

Step 2, interpreting voice content and executing commands by the client after the client had received the input voice.

Step 3, communicating the client software with the connector mounted on the car automatically.

Step 4, starting a diagnostic software, collecting data from the car, and analyzing the data from the car professionally to form a diagnostic result, by the client.

Step 5, transmitting the diagnostic result to the client, outputting the diagnostic result to the user via voice mode, and storing the diagnostic result.

The voice content comprises a whole car examination command and a full system diagnostic command.

When the voice content is the whole car examination command, the background of the mobile phone starts connection and initialization.

The connector, the mobile phone, and the car interact to do whole car examination.

The diagnostic result is uploaded to a server, and stored to the mobile phone of the user, and the whole car examination result is outputted via voice mode.

When the voice content is the full system diagnostic command, the background of the mobile phone starts connection and initialization, and obtains VIN code automatically.

The full system diagnostic process is executed automatically, a list recording realizable examination functions is scanned out, and selection or voice selection is received.

The client of the mobile phone displays the diagnostic result, and outputs the diagnostic result via voice mode.

The connector is the golo3/x431Pro connector developed by SHENZHEN LAUNCH SOFTWARE CO., LTD.

The client is the golo3/x431Pro client developed by SHENZHEN LAUNCH SOFTWARE CO., LTD.

The diagnostic software is the golo3/x431Pro diagnostic software developed by SHENZHEN LAUNCH SOFTWARE CO., LTD. The diagnostic software is downloaded by the golo3/x431Pro client. The diagnostic software has the full system diagnostic function.

The communication mode is WIFI, Bluetooth, and serial communication.

Outputting the diagnostic result via voice mode is repeated many times.

The diagnostic software is able to interpret fault code professionally.

The beneficial effects of the present invention include the following. The present invention provides a car diagnostic method based on mobile phone voice mode. After the connector had been mounted to the car, and the mobile phone had downloaded to the client, by voice input rather than hand operation, whole car examination can be done conveniently and quickly. Furthermore, the car diagnostic analyzation result is professionally outputted via voice mode and interpreted. When the professional mechanic does modification, the professional mechanic can do other things simultaneously. By only inputting voice, the VIN code of the car can be obtained quickly, and the corresponding system of the car is started. Without professional technical skill, the corresponding system can be found, and the full function diagnosis can be executed, which is quick, convenient, and time consuming.

To further learn features and technical content of the present invention, please refer to the detailed illustration of the present invention described in the following and the accompanying drawings. However, the accompanying drawings are just used to provide reference and illustration, and not used to limit the present invention.

### BRIEF DESCRIPTION OF THE DRAWINGS

Illustrated embodiments of the present invention are described in detail in conjunction with the accompanying drawings, to make the technical solution and other beneficial effects of the present invention be apparent.
FIG. 1 is a flowchart of a car diagnostic method based on mobile phone voice mode of the present invention.
FIG. 2 is a basic logic diagram of a car diagnostic method based on mobile phone voice mode of the present invention.

### DETAILED DESCRIPTION OF ILLUSTRATED EMBODIMENTS

To further illustrate technical solution employed by the present invention and effects brought by the technical solution, the following will describe the technical solution and effects in detail in combination with preferred embodiments and the accompanying drawings of the present invention.

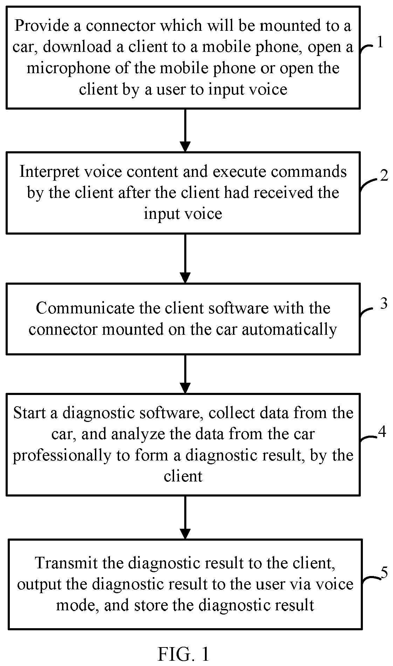

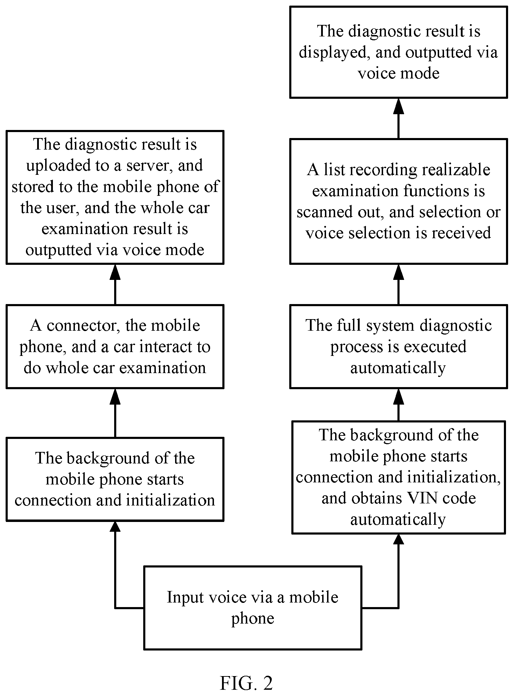

Referring to FIG. 1 and FIG. 2, FIG. 1 is a flowchart of a car diagnostic method based on mobile phone voice mode of the present invention, and FIG. 2 is a basic logic diagram of a method based on mobile phone voice mode of the present invention. The present invention provides a car diagnostic method based on mobile phone voice mode which includes the following steps.

Step 1, providing a connector which will be mounted to a car, downloading a client to a mobile phone, opening the microphone of the mobile phone or opening the client by a user to input voice.

The connector is the golo3/x431Pro connector developed by SHENZHEN LAUNCH SOFTWARE CO., LTD.

The client is the golo3/x431Pro client developed by SHENZHEN LAUNCH SOFTWARE CO., LTD.

Step 2, interpreting voice content and executing commands by the client after the client had received the input voice.

The voice content includes a whole car examination command and a full system diagnostic command.

Step 3, communicating the client software with the connector mounted on the car automatically.

The communication mode is WIFI, Bluetooth, and serial communication.

Step 4, starting a diagnostic software, collecting data from the car, and analyzing the data from the car professionally to form a diagnostic result, by the client.

The diagnostic software is the golo3/x431Pro diagnostic software developed by SHENZHEN LAUNCH SOFTWARE CO., LTD. The diagnostic software can be downloaded by the golo3/x431Pro client. The diagnostic software has the full system diagnostic function, and covers 200 car types, such as EOBD2, BMW, BENZ, VW, and so on.

Step 5, transmitting the diagnostic result to the client, outputting the diagnostic result to the user via voice mode, and storing the diagnostic result.

Outputting the diagnostic result via voice mode can be repeated many times.

The diagnostic software can also interpret fault code professionally.

When the voice content in step 2 is the whole car examination command, after entering step 3, the background of the mobile phone starts connection and initialization. After entering step 4, the connector, the mobile phone, and the car interact to do whole car examination. After entering step 5, the diagnostic result is uploaded to a server, and stored to the mobile phone of the user, and the whole car examination result is outputted via voice mode. Thus it can be seen that when the user wants to examine the whole car, it only needs the user to open the microphone of the mobile phone, or the golo3/x431Pro client developed by SHENZHEN LAUNCH SOFTWARE CO., LTD, and input voice of "whole car examination", then the device and the mobile phone will prepare well automatically, and do whole car examination. The examination result is outputted via voice mode, and the diagnostic analyzation result is also stored.

When the voice content in step 2 is the full system diagnostic command, after entering step 3, the background of the mobile phone starts connection and initialization, and obtains VIN code automatically. After entering step 4, the full system diagnostic process is executed automatically, a list recording realizable examination functions is scanned out, and selection or voice selection may be received. After entering step 5, the client of the mobile phone displays the diagnostic result, and outputs the diagnostic result via voice mode. Thus it can be seen that when a professional mechanic needs to modify, the mechanic can start the diagnostic software via voice mode. The system will automatically scan the VIN code for the professional mechanic, and the system of the car is automatically started. The professional mechanic can do diagnosis by hands or by voice input, for example, read default code, read datastream, and test motion.

From the above, the present invention provides a car diagnostic method based on mobile phone voice mode. After the connector had been mounted to the car, and the mobile phone had downloaded to the client, by voice input rather than hand operation, whole car examination can be done conveniently and quickly. Furthermore, the car diagnostic analyzation result is professionally outputted via voice mode and interpreted. When the professional mechanic does modification, the professional mechanic can do other things simultaneously. By only inputting voice, the VIN code of the car can be obtained quickly, and the corresponding system of the car is started. Without professional technical skill, the corresponding system can be found, and the full function diagnosis can be executed, which is quick, convenient, and time consuming.

For those skilled in the art, they can make various changes and transformations according to the technical solution and technical conception of the present invention, while all of the changes and transformations shall fall within the protection scope of the appended claims of the present invention.

## Claims

1. A car diagnostic method based on mobile phone voice mode, comprising:
step 1, providing a connector which will be mounted to a car, downloading a client to a mobile phone, opening a microphone of the mobile phone or opening the client by a user to input voice;
step 2, interpreting voice content and executing commands by the client after the client had received the input voice;
step 3, communicating the client software with the connector mounted on the car automatically;
step 4, starting a diagnostic software, collecting data from the car, and analyzing the data from the car professionally to form a diagnostic result, by the client;
step 5, transmitting the diagnostic result to the client, outputting the diagnostic result to the user via voice mode, and storing the diagnostic result.

2. The car diagnostic method based on mobile phone voice mode of claim 1, wherein the voice content comprises a whole car examination command and a full system diagnostic command.

3. The car diagnostic method based on mobile phone voice mode of claim 2, wherein when the voice content is the whole car examination command, the background of the mobile phone starts connection and initialization.

4. The car diagnostic method based on mobile phone voice mode of claim 3, wherein the connector, the mobile phone, and the car interact to do whole car examination.

5. The car diagnostic method based on mobile phone voice mode of claim 4, wherein the diagnostic result is uploaded to a server, and stored to the mobile phone of the user, and the whole car examination result is outputted via voice mode.

6. The car diagnostic method based on mobile phone voice mode of claim 2, wherein when the voice content is the full system diagnostic command, the background of the mobile phone starts connection and initialization, and obtains VIN code automatically.

7. The car diagnostic method based on mobile phone voice mode of claim 6, wherein the full system diagnostic process is executed automatically, a list recording realizable examination functions is scanned out, and selection or voice selection is received.

8. The car diagnostic method based on mobile phone voice mode of claim 7, wherein the client of the mobile phone displays the diagnostic result, and outputs the diagnostic result via voice mode.

9. The car diagnostic method based on mobile phone voice mode of claim 1, wherein the communication mode is WIFI, Bluetooth, and serial communication; and outputting the diagnostic result via voice mode is repeated many times.

10. The car diagnostic method based on mobile phone voice mode of claim 1, wherein the diagnostic software is able to interpret fault code professionally.
